# EUROPEAN PATENT APPLICATION

(11) **EP 2 100 822 A1**
(43) Date of publication of application: **16.09.2009**
(21) Application number: 09250596.5
(22) Date of filing: 02.03.2009
(51) Int. Cl.: B65D 41/34, B29C 45/16

(54) **A closure**

(30) Priority: 13.03.2008 GB 0804608; 26.08.2008 GB 0815480
(71) Applicant: Obrist Closures Switzerland GmbH, 4153 Reinach (CH)
(72) Inventor: Benoit-Gonin, Claude, 69460 Odenas (FR); Bardet, Philippe, 69400 Gleize (FR)
(74) Representative: Greenwood, Matthew David

(57) **Abstract**

A closure (10) comprising a shell, the shell having a main body part (20) including a generally cylindrical side wall (35) with a free end and having an at least partly open end opposite the free end the shell further having a top plate part (30) extending over the open end, in which the main body part is formed from a first material and the top plate part is formed from a second material which is different form the first.

## Description

The present invention relates generally to a closure and particularly to a closure adapted to have different parts having different material properties.

There are many circumstances in which different parts of a closure are required to fulfil very different roles. For example, some parts might be required to provide a liquid-tight seal and other parts might be required to provide strength and rigidity.

An example of a situation in which different parts of a closure are required to provide very different functions is in applications where they will be used in conjunction with containers for sensitive materials. By this is meant materials which require the closure to provide some form of barrier to entry or exit of material.

For example, mineral water is sensitive to oxygen and therefore, mineral water closures are usually provided with some form of barrier to prevent the ingress of gasses which would otherwise affect the taste such as oxygen. The sidewall of mineral water closures must have properties including resistance to over-screwing and stress-cracking ant therefore certain materials, such as high-density polyethylene are used. However, these materials do not have a high inherent impermeability to oxygen. One solution for decreasing permeability is to increase the thickness of the closure material in the region of the top plate which forms the interface between the atmosphere and the headspace of a mineral water bottle. This, of course, increases the weight and cost of the closure.

The present invention seeks to address the problems with known "multi-function" closures.

According to a first aspect of the present invention there is provided a closure comprising a shell, the shell having a main body part including a generally cylindrical side wall with a free end and having an at least partly open end opposite the free end, the shell further having a top plate part extending over the open end, in which the main body part is formed from a first material and the top plate part is formed from a second material which is different form the first.

According to a further aspect of the present invention there is provided a closure comprising a shell, the shell wall comprising at least a first part formed from a first material and at least a second part formed from a second material which is different from the first.

This allows for a unitary shell wall with multiple material 'zones' with consequential variation in material properties.

By shell wall it is meant the primary wall structure which defines the closure.

The body part may be a first part and the top plate part may be a second part.

The first part may comprise or include a sidewall portion and the second part may comprise or include a top plate portion. Other distributions of the parts and inclusion of further parts is possible.

Either or both of the parts may constitute the entirety of the wall structure for that part of the closure. In other words, the part may provide both the internal and external wall section. The parts may be homogeneous.

The closure may include a sealing portion such as a bead. In embodiments with a top plate and a discrete, but integrally formed, sidewall, the top plate may extend radically at least as far as the sealing portion.

The first part may comprise a support web for supporting the second part. The support web may include a co-operating locking formation for engaging top plate part

The closure may further comprise a tamper-evident feature, such as a tamper-evident band. In some embodiments the tamper-evident band may comprise or include the second part.

The second material may comprise a barrier material for preventing egress or ingress of a substance.

The first and/or second material may comprise a plastics material, for example a polyethylene or a polypropylene.

The second material may comprise polyethylene terephthalate (PET). PET is an extremely good barrier to oxygen and other gasses and thus is useful for mineral water applications.

Whilst the shell includes a plurality of material sections, it must ultimately function as if it were a unitary wall structure. The first and second parts may therefore comprise co-operating locking formations.

The closure may be formed by bi-injection moulding the parts together.

According to a further aspect there is provided a closure comprising a shell with a side wall having a free end and an at least partly open end opposite the free end, and a top plate moulded into or onto the open end, the side wall being formed from a first material and the top plate being formed from a second material which is different from the first.

In an alternative aspect the present invention provides a mineral water closure comprising a closure as described herein.

The present invention will now be particularly described, by way of example, with reference to the accompanying drawings in which:
Figure 1 is a section of a closure formed in accordance with the present invention;
Figure 2 is an exploded perspective view of the closure of Figure 1;
Figure 3 is an exploded sectional view of the closure components shown in Figure 2.
Figure 4 is a section of a closure formed according to an alternative embodiment.
Figure 5 is a section of a closure formed according to a further embodiment.
Figure 6 is a section of a closure formed according to further embodiment.
Figure 7 is a section of a closure formed according to a further embodiment; and
Figure 8 is a plan view of Figure 7.

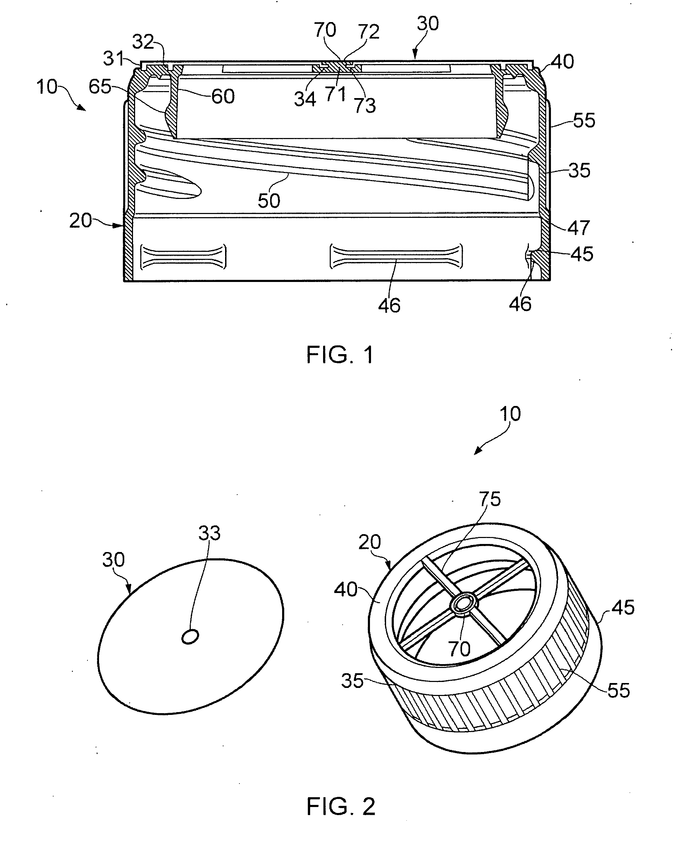

Referring to Figure 1 to 3 there is shown a closure generally indicated 10. The closure 10 comprises a shell or main wall structure which is made up of a main body 20 and a top plate 30.

The body 30 comprises a generally cylindrical sidewall 35 which at one end ("the top") continues into a shoulder 40 and at its other (the free end) end has an annular tamper-evident band 45.

The interior of the sidewall 35 is provided with internal screw thread formations 50 for engagement with corresponding formations on a container neck (not shown). The exterior of the sidewall 35 is provided with a plurality of axial ribs 55 to assist with gripping and turning of the closure in use. An annular sealing wall 60 depends from the free end of the shoulder 40. The free end of the wall 60 includes a sealing bead (or "olive" seal) 65. In use the wall 60 and seal 65 cooperate with the container neck rim (not shown) to form a seal.

The shoulder 40 includes two annular channels 41, 42, the purpose of which will be described in more detail below.

At the centre of the orifice defined by the shoulder 40 a hub 70 is provided from which four equally spaced spokes 75 extend and connect to the shoulder 40 at the point from which the wall 60 depends. The hub 70 includes a central post 71 with an enlarged head 72 which defines an annular recess 73. Together the hub 70 and spokes 75 form a supporting web the purpose of which will be described in more detail below.

The tamper-evident band 45 is of generally standard construction and includes a plurality of internal steps 46 which extend radially inward and in use engage under a bead, rim, or the like on a container neck (not shown). The band 45 is joined to the sidewall 35 by the frangible line of weakness 47 so that in use when the closure is capped onto the container the steps 46 engage under the bead and then on first removal of the closure the steps cannot pass back over the bead so that the closure splits along the line of weakness 47 leaving the band 45 on the container and the closure free to rotate and be removed and replaced.

The top plate 30 is generally disc-like. At the periphery of the plate 30 two concentric annular ribs 31, 32 are provided. The ribs 31, 32 are configured to fit within the channels 41,42 of the shoulder 40 as shown best in Figure 1.

At the centre of the disc 30 and orifice 33 is provided and is surrounded and defined by a stepped annular portion 34. The annular step portion 34 is shaped to fit around the post 71 of the hub 70 as shown best in Figure 1.

In this embodiment the closure 10 is intended for use as a mineral water cap. The body 20 is formed from high-density polyethylene and the top plate 30 is formed from polyethylene terephthalate. The closure 10 is formed by a bi-injection moulding process in which the body 20 is formed first and then the top plate 30 is moulded onto the body 20. The bi-injection moulding process means that the material of the top plate flows into the channels 41, 42 and around the post 71 of the body to form the ribs 31, 32 and step 34 as shown best in Figure 1. The result is that the top plate is locked onto the body so that effectively the two components become an integral shell having different parts formed from different materials. The characteristics of the body 20 are resistance to over-screwing and stress-cracking whereas the characteristics of the top plate are as a good barrier to the ingress of oxygen.

The top plate 30 is supported by the support web provided by the spokes 75 and hub 70.

In other embodiments (not shown) different materials can, of course, be used and different parts of the closure can be formed from different materials using the principles of the present invention. For example, a tamper-evident band could be bi-injection moulded onto the free end of a sidewall.

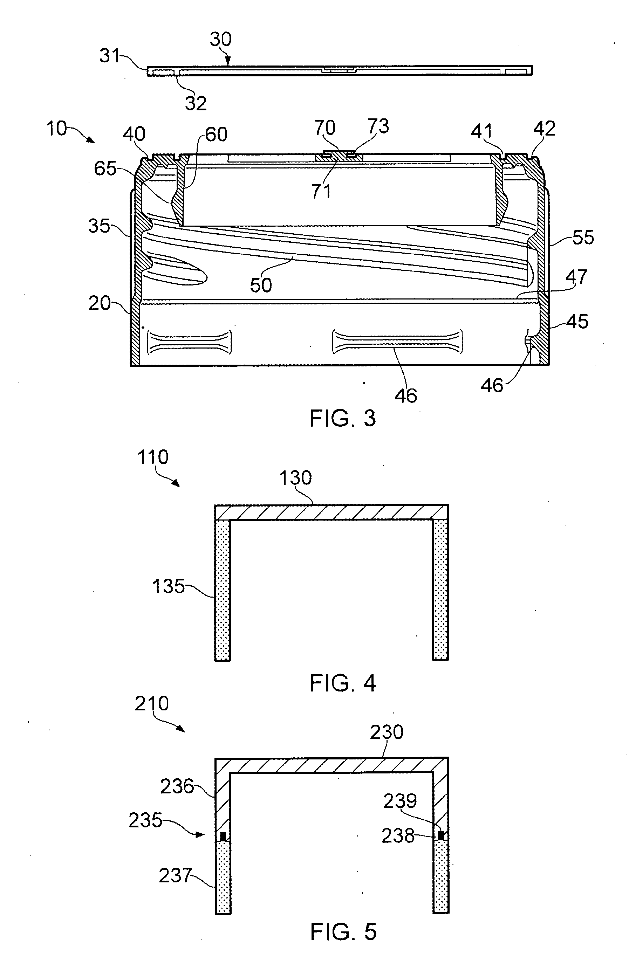

Referring now to Figure 4 there is shown a closure 110 formed according to an alternative embodiment. The closure shell primary wall structure comprises a top plate 130 formed from a first material (in this embodiment polypropylene) and a side wall 135 formed from a second material (in this embodiment polyethylene). The top plate and side wall are formed by bi-injection moulding so that they effectively become a one-piece shell. The closure 110 has engagement means (not shown) for engaging a container.

Referring now to Figure 5, there is shown a closure 210 formed according to an alternative embodiment. The closure comprises a top plate 230 and a side wall 235. The side wall 235 is formed from two parts. The first wall part 236 depends from the top plate and is formed integrally therewith from the same material. The second wall part 237 extends from the free end of the first part and is formed from a different material. The first part includes an annular channel 238 or recess at its free end and the second part includes a corresponding raised annular ring 239 which fits into the channel 238. The top plate/sidewall first part and sidewall second part are formed by sequential moulding and the channel and ring help to hold the second part on the first part.

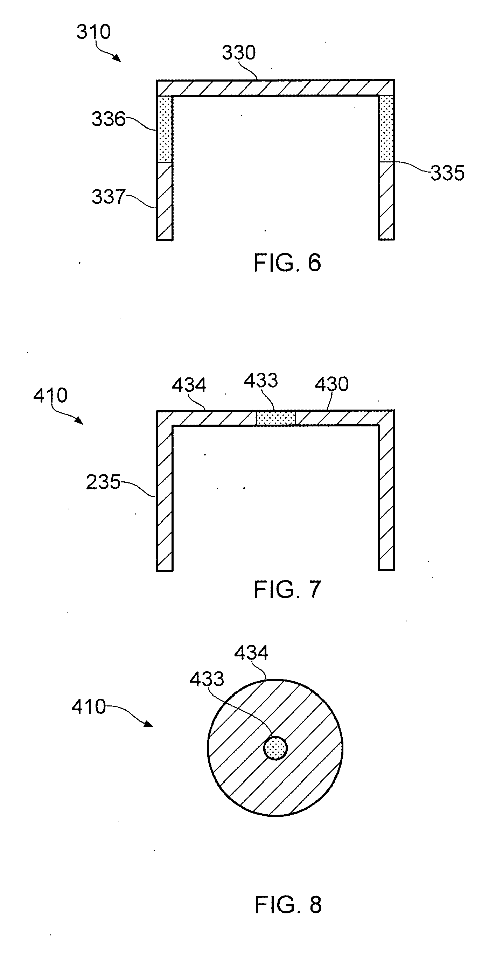

Referring now to Figure 6 there is shown a closure 310 formed according to an alternative embodiment. The closure comprises a top plate 330 and a side wall 335. The top plate wall section 330 is made from a first material. The side wall is formed from a first wall part 336 which depends from the top plate and a second wall part 337 which extends from the first part. The second part is formed from the first material and the first part if formed from a second material. In an alternative embodiment (not shown) the second part is formed from a third material.

Referring now to Figures 7 and 8 there is shown a closure 410 formed according to an alternative embodiment. The closure comprises a top plate 430 and a side wall 435. The top plate 430 comprises a first circular central section 433 and a second outer annular section 434. The central section is formed from a first material. The outer section and the side wall are formed from a second material.

## Claims

1. A closure comprising a shell, the shell having a main body part including a generally cylindrical side wall with a free end and having an at least partly open end opposite the free end, the shell further having a top plate part extending over the open end, in which the main body part is formed from a first material and the top plate part is formed from a second material which is different form the first.

2. A closure as claimed in Claim 1 in which the open end of the body part comprises a support web for supporting the top plate part.

3. A closure as claimed in any preceding claim, in which the second material comprises a barrier material.

4. A closure as claimed in any preceding claim, in which the first material comprises a plastics material.

5. A closure as claimed in any preceding claim, in which the second material comprises a plastics material.

6. A closure as claimed in any preceding claim, in which the first material comprises a polyethylene.

7. A closure as claimed in any preceding claim, in which the first material comprises a polypropylene.

8. A closure as claimed in any preceding claim, in which the second material comprises polyethylene terephthalate.

9. A closure as claimed in any preceding claim in which the body part and top plate part comprise co-operating locking formations.

10. A closure as claimed in claim 9, in which the support web includes a cooperating locking formation for engaging the top plate part.

11. A closure as claimed in any preceding claim in which the closure is formed by bi-injection moulding the parts together.

12. A closure as claimed in any preceding claim in which the closure includes a sealing bead.

13. A closure as claimed in any preceding claim, in which the top plate part is generally disc-shaped.

14. A closure comprising a shell with a side wall having a free end and an at least partly open end opposite the free end, and a top plate moulded into or onto the open end, the side wall being formed from a first material and the top plate being formed from a second material which is different from the first.

15. A mineral water closure comprising a closure as claimed in any preceding claim.
